# FASCICULE DE BREVET EUROPEEN

(11) **EP 4 100 639 B1**
(45) Date de publication et mention de la délivrance du brevet: **04.11.2026**
(21) Numéro de dépôt: 21702689.7
(22) Date de dépôt: 05.02.2021
(51) Int. Cl.: F02K 1/72

(54) **DISPOSITIF DE FIXATION D'UN PIED DE BIELLE DE VOLET D'INVERSION DE POUSSÉE À GRILLES**
VORRICHTUNG ZUM BEFESTIGEN EINES PLEUELSTANGENSCHENKELS FÜR EINE SCHUBUMKEHR-KASKADENKLAPPE
DEVICE FOR ATTACHING A CONNECTING ROD SMALL END FOR A THRUST REVERSAL CASCADE FLAP

(30) Priorité: 06.02.2020 FR 2001198
(43) Date de publication de la demande: 14.12.2022
(73) Titulaire: Safran Nacelles, 76700 Gonfreville-l'Orcher (FR)
(72) Inventeur: CAZUC, Xavier, 77550 MOISSY-CRAMAYEL (FR); JORET, Jean-Phillipe, 77550 MOISSY-CRAMAYEL (FR)
(74) Mandataire: Casalonga
(86) Numéro de dépôt international: PCT/EP2021/052868
(87) Numéro de publication internationale: WO 2021/156477

(56) Documents cités:
- EP-A1- 3 293 388
- FR-A1- 2 958 978
- US-A- 4 605 186
- US-A1- 2017 101 962

## Description

La présente invention concerne les inverseurs de poussée à grilles et se rapporte plus particulièrement à la fixation des pieds de bielle des volets d'inversion de poussée.

Un aéronef comprend généralement un groupe motopropulseur formé par une pluralité de turboréacteurs fournissant la poussée nécessaire à son mouvement.

Chaque turboréacteur est logé dans une nacelle qui assure différentes fonctions, comme par exemple une inversion de poussée qui est obtenue à l'aide d'un inverseur de poussée qui a pour rôle, lors de l'atterrissage d'un aéronef, de réduire la distance de freinage de celui-ci en redirigeant vers l'avant au moins une partie de la poussée engendrée par le turboréacteur, créant ainsi une contre-poussée contribuant au freinage de l'aéronef.

Le turboréacteur comprend généralement une entrée d'air et une soufflante qui assure la compression de l'air et sa division en flux d'air primaire et secondaire.

Il comprend également une veine primaire dans laquelle circule le flux d'air primaire au travers d'un compresseur, d'une chambre de combustion et d'une turbine, et une veine secondaire.

Plus particulièrement, l'inverseur de poussée obstrue une partie aval de la veine secondaire au moyen d'un obstacle solide afin de rediriger le flux d'air secondaire vers l'avant.

Les aéronefs modernes sont généralement dotés d'inverseurs à grilles comportant une pluralité de volets de blocage montés de manière articulée sur un capot mobile coulissant le long de rails de manière à découvrir et ou à dissimuler des grilles.

Les grilles sont aptes à réorienter le flux d'air secondaire vers l'amont de la nacelle lorsque l'aéronef est en train de freiner.

Le capot mobile est déplaçable longitudinalement en translation entre une position fermée, communément appelée « jet direct » dans laquelle les grilles sont dissimulées à l'intérieur du capot et une position ouverte ou « jet inverse » dans laquelle les grilles assurent leur fonction de déviation du fait de leur exposition au flux secondaire.

Plus particulièrement, le dispositif comprend une pluralité de bielles dont la fonction est de relier les volets de blocage à une structure interne de la nacelle communément appelée IFS (pour « Inner Fixed Structure » en anglais).

Autrement dit, lorsque l'inverseur de poussée fonctionne en jet direct, les volets de blocage sont maintenus dans une position escamotée mais lorsqu'il fonctionne en jet inversé, les volets sont déployés de manière à dévier le flux d'air secondaire.

Afin de réduire les pertes de performances aérodynamiques au niveau de l'interface entre chacune des bielles de volets et leur point de fixation sur la structure fixe de l'inverseur de poussée, il est généralement connu d'utiliser un carénage aérodynamique.

Néanmoins, le carénage présente certains inconvénients liés notamment à sa fixation.

Une des configurations connues est de fixer un carénage à la structure fixe de la nacelle, enveloppant le pied de la bielle. Cet agencement augmente l'encombrement du carénage au détriment de son aérodynamisme.

Une autre solution consiste à intégrer le carénage à la ferrure du pied de bielle, ce qui permet d'optimiser l'encombrement. Cette solution est toutefois aérodynamiquement moins performante.

De plus, les forces qui s'exercent sur le carénage, généralement en matière plastique, peuvent l'endommager voire, le dissocier de la structure sur laquelle le carénage est fixé.

L'enjeu est donc de s'affranchir du carénage tout en améliorant l'écoulement aérodynamique et le maintien de l'agencement au niveau du pied de bielle.

Le document US 2017/101 962 A1 va dans ce sens. Ce document divulgue un dispositif de fixation d'un pied de bielle de volet d'inversion de poussée à grilles sur une structure interne fixe d'une nacelle de turboréacteur, comprenant une ferrure apte à être fixée à ladite structure interne fixe et une interface de liaison formant une articulation entre le pied de bielle et la ferrure. Cependant, le dispositif de fixation du document US 2017/101 962 A1 ne sécurise pas l'interface de liaison en rotation.

Un autre document, le EP 3 293 388 A1, divulgue aussi un dispositif de fixation d'un pied de bielle de volet d'inversion de poussée à grilles sur une structure interne fixe d'une nacelle de turboréacteur. Mais le document EP 3 293 388 A1 ne stipule pas non plus que le dispositif doit être sécurisé.

Au vu de ce qui précède, l'invention a pour objet un dispositif de fixation d'un pied de bielle de volet d'inversion de poussée à grilles sur une structure interne fixe d'une nacelle de turboréacteur, comprenant une ferrure apte à être fixée à ladite structure interne et une interface de liaison formant une articulation entre le pied de bielle et la ferrure.

Le dispositif comporte un moyen de blocage amovible apte à coopérer avec l'interface de liaison de sorte à la bloquer en rotation, le moyen de blocage et l'interface de liaison étant disposées à l'intérieur de la ferrure.

Par « disposées à l'intérieur de la ferrure », on entend qu'aucun bossage n'est formé au niveau de l'enveloppe de la ferrure par le volume de l'interface de liaison et de la fourchette. On entend en outre que la fourchette et l'interface de liaison sont circonscrites dans l'espace interne délimité par les côtés en regard de la ferrure.

Grâce à l'absence de bossage sur le profil de la ferrure, l'écoulement aérodynamique se retrouve amélioré.

Cependant, afin de conserver un jeu constant entre l'interface de liaison et la ferrure, il est avantageux d'utiliser une pièce mécanique sous la forme d'une fourchette comme moyen de blocage de l'interface de liaison.

Comme la fourchette se trouve à l'intérieur de la ferrure, cette configuration permet en outre d'améliorer les performances aérodynamiques tout en assurant une bonne stabilité au pied de bielle et donc préserver le bon fonctionnement de l'inverseur de poussée.

Par ailleurs, de tels moyens de blocage ont une faible épaisseur, ce qui permet de limiter l'épaisseur de la ferrure et donc de limiter l'impact sur les performances du moteur du fait qu'ils sont logés à l'intérieur du volume délimité par la ferrure.

L'interface de liaison comprend une première vis et un premier écrou apte à coopérer avec ladite première vis. C'est donc la vis qui sert d'axe pivot au pied de bielle.

Il est à noter que l'écrou est avantageusement de forme rectangulaire, ce qui permet d'effectuer un serrage de la première vis au couple.

De préférence, la première vis comprend au moins un méplat ou au moins un épaulement en contact avec son embase, le moyen de blocage amovible comprenant une fourchette comportant au moins une dent s'étendant selon un axe transversal perpendiculaire à l'axe longitudinal de la première vis, ladite au moins une dent coopérant avec ledit au moins un méplat ou épaulement.

L'épaulement ou le méplat permet de bloquer la première vis en rotation lorsque la fourchette vient l'entourer par ladite au moins une dent.

Il est à noter que le serrage au couple autorise plus ou moins ¼ de tour.

La première vis peut comprendre une pluralité d'épaulements pouvant former par exemple un épaulement de forme hexagonale. De même, la première vis peut comporter en variante audit au moins un épaulement, au moins un méplat ou une pluralité de méplats, par exemple de forme hexagonale.

Quant à la jonction, elle peut comprendre à titre d'exemple deux côtés formant de préférence un angle obtus.

Alternativement, la première vis comprend au moins un logement s'étendant perpendiculairement à l'axe longitudinal de la première vis, le moyen de blocage amovible comportant une fourchette comprenant une tige configurée pour être insérée dans ledit logement.

Autrement dit, par l'insertion de l'unique dent de la fourchette dans ledit logement, la première vis est bloquée en rotation.

Le nombre de logements au sein de la première vis est choisi en fonction du couple de serrage entre le premier écrou et la première vis.

Préférentiellement, le dispositif comporte des moyens de maintien disposés à l'intérieur de la ferrure et aptes à maintenir le moyen de blocage en position.

Lorsque le capot translate de la position fermée à la position ouverte, la fourchette est soumise à des forces, notamment des forces de cisaillement, aptes à la dissocier de la ferrure du pied de bielle, ce qui pourrait avoir comme conséquence, le desserrage de la première vis conduisant à une fragilisation de la tenue mécanique du dispositif de fixation du pied de bielle.

Il est donc avantageux de prévoir des moyens de maintien de la fourchette en position afin de garantir la stabilité de l'agencement des pièces mécaniques dudit dispositif.

Avantageusement, les moyens de maintien comprennent une goupille à ressort entourant une zone d'appui solidaire de la ferrure et traversant le moyen de blocage.

Selon une autre variante, les moyens de maintien comportent au moins un rivet localisé sur le moyen de blocage.

Selon une autre variante, les moyens de maintien comprennent une deuxième vis apte à coopérer avec un deuxième écrou.

Il est à noter que dû à l'absence de mouvement relatif entre la fourchette et la ferrure, un serrage au couple est ici suffisant.

Préférentiellement, les moyens de maintien comprennent un fil à freiner disposé entre le deuxième écrou et le moyen de blocage, apte à maintenir en position la deuxième vis.

Avantageusement, les moyens de maintien sont à une distance comprise entre 12mm et 200mm de l'interface de liaison.

De préférence, le pied de bielle comprend au moins deux saillies perpendiculaires à l'axe longitudinal de la bielle, en contact avec le moyen de blocage.

Afin de réduire les oscillations angulaires de la bielle, conséquences du chargement aérodynamique, il est avantageux d'intégrer lesdites au moins deux saillies dans le pied de bielle les mettant ainsi en contact avec la fourchette.

Cela a également pour avantage de réduire les dimensions d'autres pièces mécaniques disposées à l'intérieur de la ferrure et qui ont initialement pour fonction de limiter le débattement angulaire de la bielle. La largeur de la ferrure se retrouve réduite, ce qui est caractérisé par une réduction de la masse de l'ensemble et une plus grande performance aérodynamique.

Selon un autre aspect, il est proposé un inverseur de poussée à grilles comprenant un dispositif de fixation d'au moins un pied de bielle de volet d'inversion de poussée tel que défini ci-dessus.

L'invention a encore pour objet une nacelle pour turboréacteur d'aéronef comprenant un inverseur de poussée à grilles tel que défini ci-avant.

D'autres buts, caractéristique et avantages de l'invention apparaîtront à la lecture de la description suivante, donnée uniquement à titre d'exemple non limitatif, et faite en référence aux dessins indexés sur lesquels :

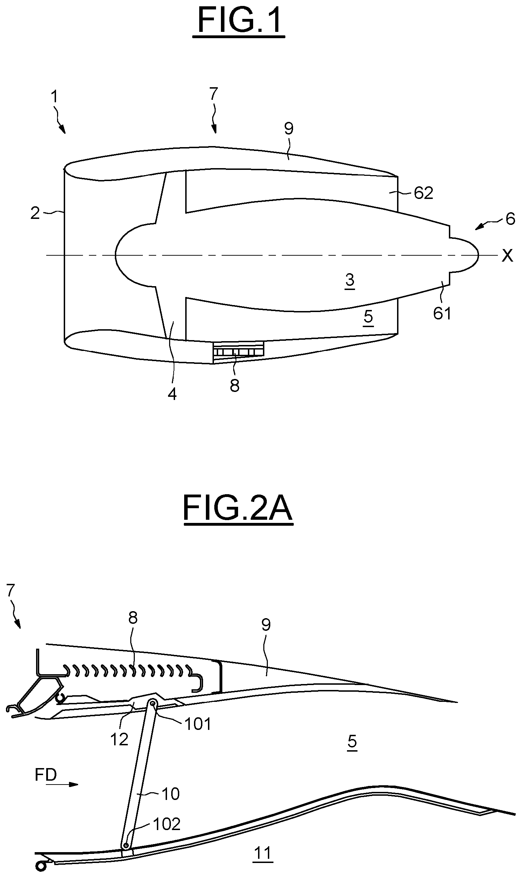

[fig.1] représente de manière schématique une nacelle de turboréacteur pour aéronef comprenant un inverseur de poussée à grilles selon l'état de la technique ;
[fig.2A]

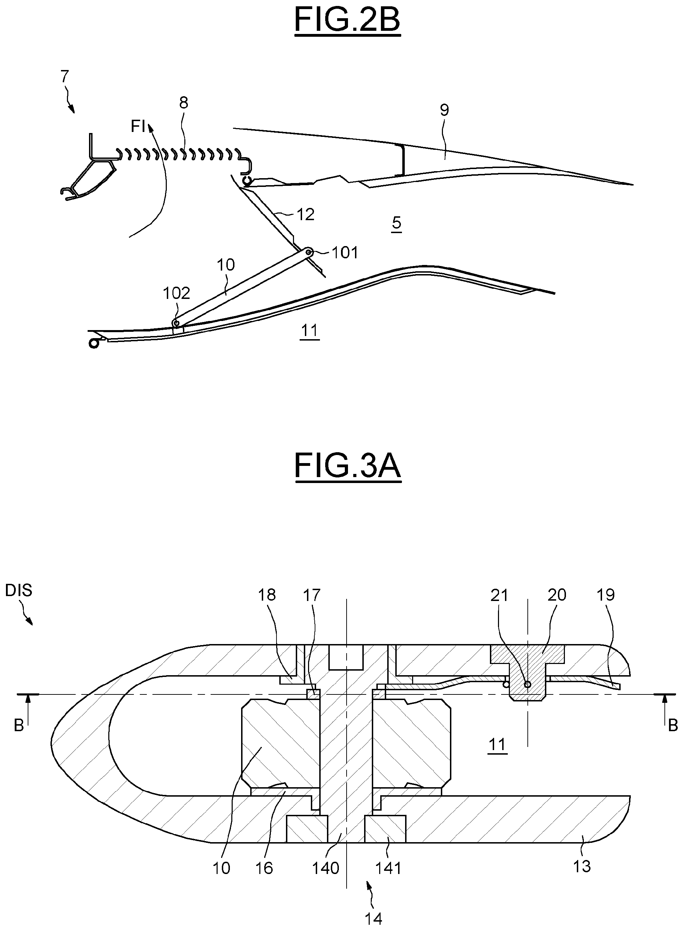

[fig.2B] illustrent chacune une vue selon une coupe axiale d'un inverseur de poussée à grilles respectivement en position jet direct et jet inverse selon l'état de la technique;
[fig.3A]
[fig.3B] illustrent schématiquement un premier mode de réalisation d'un dispositif de fixation d'un pied de bielle de volet d'inversion de poussée à grilles ;
[fig.4] illustre un deuxième mode de réalisation dudit dispositif de fixation ;
[fig.5A]

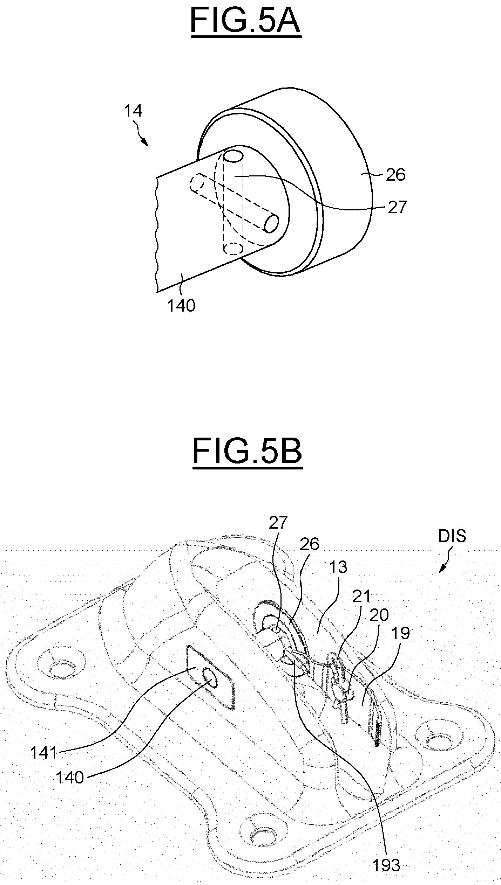

[fig.5B] représentent des vues en perspective d'un troisième mode de réalisation du dispositif de fixation du pied de bielle ;
[fig.6]$

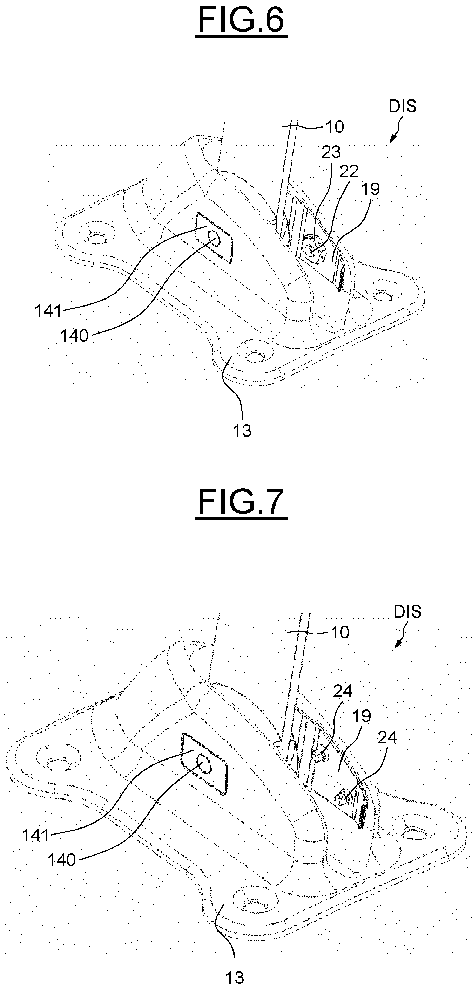

[fig.7] illustrent des exemples de moyens de maintien d'une fourchette amovible disposée à l'intérieur dudit dispositif de fixation conformément à l'invention et,
[fig.8A]

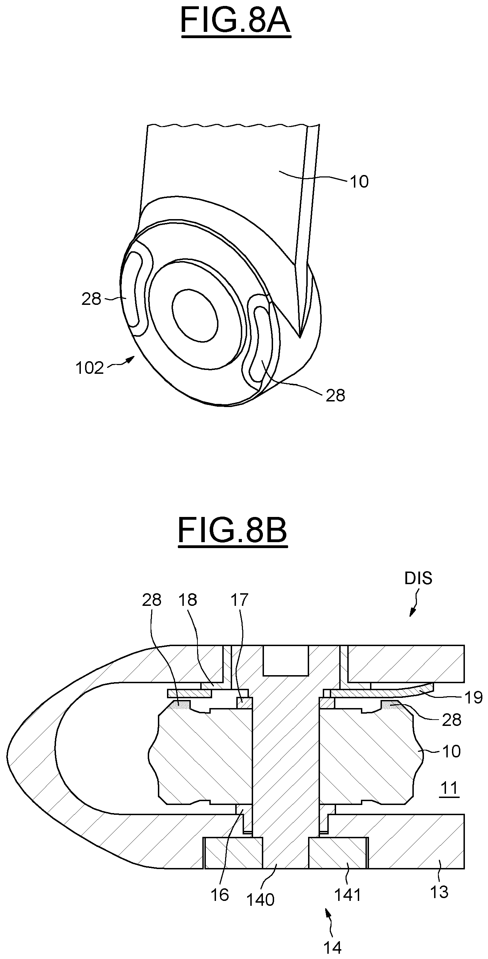

[fig.8B] représentent un mode de réalisation du pied de bielle et son agencement dans ledit dispositif.

Sur la figure 1 est représenté un ensemble propulsif 1 comprenant une nacelle 2 généralement de structure tubulaire selon un axe longitudinal X.

Il comprend en outre un turboréacteur 3 par exemple de type double flux, apte à générer, par l'intermédiaire d'une soufflante 4 en rotation, un flux d'air primaire et secondaire.

Le flux d'air secondaire circule à l'extérieur du turboréacteur 3 à travers une veine annulaire 5 formée entre deux parois de la nacelle 2.

Les flux primaires et secondaires sont éjectés du turboréacteur 3 par une tuyère d'éjection 6 située à l'arrière de la nacelle 2 et comprenant plus particulièrement une tuyère primaire 61 apte à éjecter le flux primaire.

La tuyère d'éjection 6 comprend en outre une tuyère secondaire 62 apte à éjecter le flux secondaire.

Afin de réduire la distance de freinage de l'aéronef lors de l'atterrissage, la nacelle 2 comprend un système mécanique d'inversion de poussée à grilles 7.

Plus particulièrement, le système mécanique d'inversion de poussée a pour rôle de rediriger vers l'avant de la nacelle 2 au moins une partie de la poussée engendrée par le turboréacteur 3 créant ainsi une contre-poussée.

Pour ce faire, des grilles 8 sont dissimulées dans un capot mobile 9 apte à coulisser le long de rails d'une position fermée à une position ouverte de manière à découvrir lesdites grilles, ce qui permet de réorienter le flux d'air secondaire vers l'amont de la nacelle 2.

La position fermée est illustrée dans la figure 2A dans laquelle est représenté le capot mobile 9 comportant une pluralité de volets de blocage 12 formant une articulation avec ledit capot coulissant 9.

Une bielle de liaison 10 est montée pivotante sur le volet de blocage 12 et sur une structure interne fixe 11 communément appelée IFS (pour « Inner Fixed Structure » selon le vocable anglosaxon) apte à entourer la partie arrière du turboréacteur 3.

La bielle 10 comprend une première articulation 101 sur le volet de blocage 12 ainsi qu'une deuxième articulation 102, correspondant au pied de la bielle 10, sur la structure interne 11.

Ainsi, dans cette position fermée, le flux secondaire est apte à circuler dans la veine annulaire 5 et générer avec le flux primaire un flux FD générant une poussée.

Pour générer une contre-poussée, un actionneur tel qu'un vérin hydraulique non représenté sur la figure 2B fait coulisser le capot 9 et entraine l'obturation de la veine annulaire 5 par les volets de blocage 12.

Ceci entraine par conséquent la redirection du flux secondaire en un flux inversé, ici représenté par la référence FI, à travers les grilles 8 pour créer la contre-poussée.

Pour garantir le bon fonctionnement de la bielle 10 et donc de l'inverseur, il est avantageux d'entourer le pied de bielle 10 par une ferrure 13 telle qu'illustrée dans la figure 3A. Il s'agit ici d'une vue d'une section selon l'axe longitudinal X.

A l'intérieur de l'espace délimité par la ferrure 13 est localisé un dispositif de fixation DIS du pied de bielle 10.

Le dispositif DIS comporte une interface de liaison 14 formant une liaison pivot pour le pied de la bielle 10 et une fourchette amovible 19 apte à entourer partiellement l'interface de liaison 14.

Plus particulièrement, l'interface de liaison 14 comprend une première vis 140 à empreinte ou 6 pans creux et un premier écrou 141 apte à coopérer avec ladite première vis 140.

Il est avantageux que l'écrou 141 soit d'une forme apte à coopérer avec la forme de l'orifice de la ferrure 13 dans lequel il s'insère, de manière à le bloquer en rotation.

La fourchette 19 a donc pour rôle de bloquer en rotation la première vis 140. Elle est par ailleurs fixée à la ferrure 13 et bloquée en position par des moyens de maintien comprenant dans cet exemple une goupille à ressort 21 entourant une zone d'appui 20 solidaire de la ferrure 13 et traversant la fourchette 19.

Le dispositif de fixation DIS du pied de bielle 10 comprend également une première bague 16 disposée entre le pied de la bielle 10 et la ferrure 13, apte à reprendre, lorsque l'inverseur de poussée 7 est opérationnel, les efforts transmis par la bielle 10 vers la ferrure 13 et cela à travers la première vis 140.

La première bague 16 sert en outre de butoir pour la bielle 10 pour réduire tout mouvement indésirable de la bielle 10 notamment des oscillations angulaires.

Une deuxième bague 17 est également disposée entre la bielle 10 et la fourchette 19. Elle permet, dans un premier temps, de maintenir ladite fourchette 19 en position en la maintenant en position contre une bague épaulée 18 au niveau de la ferrure 13.

Dans un second temps, la deuxième bague 17 permet de bloquer la rotule de la bielle 10 au niveau de la ferrure 13 par l'intermédiaire de l'ensemble comprenant ledit au moins un épaulement de la première vis 140, la première bague 16 et l'écrou 141.

La fourchette 13 possède donc un jeu avec la deuxième bague 17, la bague épaulée 18 et avec la première vis 140.

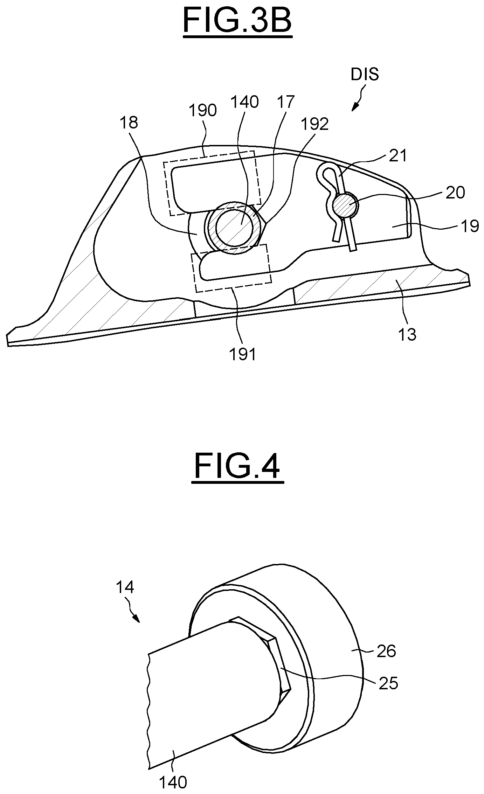

La figure 3B illustre une vue axiale selon l'axe B tel que défini dans la figure précédente.

La fourchette 19 comporte une première dent 190 et une deuxième dent 191 s'étendant selon un axe transversal perpendiculaire à l'axe longitudinal de la première vis 140.

Quant à la première vis 140, elle comprend dans cet exemple un épaulement en contact avec son embase et qui vient s'insérer entre la première et la deuxième dent 190, 191, bloquant en rotation la première vis 140.

Alternativement, tel qu'illustré dans la figure 4, la première vis 140 comprend une pluralité de méplats 25 de forme hexagonale en contact avec son embase 26.

Dans ce mode de réalisation, la première vis 140 vient, de la même manière, s'insérer entre la première et la deuxième dent 190, 191.

Une autre variante est d'insérer dans la première vis 140, comme illustré dans la figure 5A, au moins un logement 27 de forme arrondie qui s'étend perpendiculairement l'axe longitudinal de ladite vis 140.

La fourchette 19 comprend ici une unique tige 193 qui vient s'insérer dans ledit logement 27 pour bloquer la première vis 140 en rotation tel que représenté dans la figure 5B.

Il est à noter que le logement 27 peut être traversant, ce qui permet de doubler le nombre de positions dans lesquelles la tige 193 peut être insérée dans le logement 27.

Par ailleurs, on peut citer comme alternative à la goupille à ressort 21, une deuxième vis 22 apte à coopérer avec un deuxième écrou 23 tel qu'illustré dans la figure 6.

Optionnellement, on peut disposer un fil à freiner entre le deuxième écrou 23 et la fourchette 19 pour améliorer le maintien de la deuxième vis 22.

Une autre variante est d'utiliser des rivets 24 comme des moyens de maintien de la fourchette 19 comme illustré dans la figure 7.

La figure 8A illustre un mode de réalisation du pied de bielle 10 conformément à l'invention.

Le pied de bielle 10 comporte ici au moins deux saillies 28 perpendiculaires à l'axe longitudinal de la bielle 10.

Tel qu'illustré sur la figure 8B qui présente une vue axiale selon l'axe longitudinal X, en mettant en contact les deux saillies 28 avec la fourchette 19, les oscillations angulaires de la bielle 10 se retrouvent diminuées.

Cela a également pour avantage de réduire les dimensions d'autres pièces mécaniques notamment la largeur de la première bague 16. La largeur de la ferrure 13 est donc réduite tout en améliorant son profil aérodynamique.

## Revendications

1. Dispositif de fixation (DIS) d'un pied de bielle (10) de volet d'inversion de poussée à grilles sur une structure interne fixe (11) d'une nacelle (2) de turboréacteur (3), comprenant une ferrure (13) apte à être fixée à ladite structure interne fixe (11) et une interface de liaison (14) formant une articulation entre le pied de bielle (10) et la ferrure (13), l'interface de liaison (14) comprenant une première vis (140) et un premier écrou (141) apte à coopérer avec ladite première vis, **caractérisé en ce qu'**il comporte un moyen de blocage amovible (19) apte à coopérer avec l'interface de liaison (14) de sorte à la bloquer en rotation, le moyen de blocage (19) et l'interface de liaison (14) étant disposés à l'intérieur de la ferrure (13).

2. Dispositif selon la revendication 1, dans lequel la première vis (140) comprend au moins un méplat (25) ou au moins un épaulement en contact avec son embase (26), le moyen de blocage amovible (19) comprenant une fourchette comportant au moins une dent (190, 191) s'étendant selon un axe transversal perpendiculaire à l'axe longitudinal de la première vis (140), ladite au moins une dent (190, 191) coopérant avec ledit au moins un méplat (25) ou épaulement.

3. Dispositif selon la revendication 1, dans lequel la première vis (140) comprend au moins un logement (27) s'étendant perpendiculairement à l'axe longitudinal de la première vis (140), et dans lequel le moyen de blocage amovible (19) comporte une fourchette comprenant une tige (193) configurée pour être insérée dans ledit logement (27).

4. Dispositif selon l'une quelconque des revendications précédentes, comportant des moyens de maintien disposés à l'intérieur de la ferrure (13) et aptes à maintenir le moyen de blocage (19) en position.

5. Dispositif selon la revendication 4, dans lequel les moyens de maintien comprennent une goupille à ressort (21) entourant une zone d'appui (20) solidaire de la ferrure et traversant le moyen de blocage (19).

6. Dispositif selon la revendication 4, dans lequel les moyens de maintien comprennent au moins un rivet (24) localisé sur le moyen de blocage (19).

7. Dispositif selon la revendication 4, dans lequel les moyens de maintien comprennent une deuxième vis (22) apte à coopérer avec un deuxième écrou (23).

8. Dispositif selon la revendication 7, dans lequel les moyens de maintien comprennent un fil à freiner disposé entre le deuxième écrou (23) et le moyen de blocage (19), apte à maintenir en position la deuxième vis (22).

9. Dispositif selon l'une quelconque des revendications 4 à 8, dans lequel les moyens de maintien sont à une distance comprise entre 12mm et 200mm de l'interface de liaison (14).

10. Dispositif selon l'une quelconque des revendications précédentes, dans lequel le pied de bielle (10) comprend au moins deux saillies (28) perpendiculaires à l'axe longitudinal de la bielle (10) et en contact avec le moyen de blocage (19).

11. Inverseur de poussée à grilles (7) comprenant un dispositif de fixation (DIS) d'au moins un pied de bielle (10) de volet d'inversion de poussée selon l'une quelconque des revendications 1 à 10.

12. Nacelle (2) pour turboréacteur (3) d'aéronef, comportant un inverseur de poussée à grilles (7) selon la revendication 11.

## Patentansprüche

1. Vorrichtung zum Befestigen (DIS) eines kleinen Pleuelauges (10) einer Gitter-Schubumkehrklappe an einer festen inneren Struktur (11) einer Gondel (2) eines Turbotriebwerks (3), umfassend einen Beschlag (13), der imstande ist, an der festen inneren Struktur (11) befestigt zu werden, und eine Verbindungsschnittstelle (14), die ein Gelenk zwischen dem kleinen Pleuelauge (10) und dem Beschlag (13) bildet, wobei die Verbindungsschnittstelle (14) eine erste Schraube (140) und eine erste Mutter (141) umfasst, die imstande ist, mit der ersten Schraube zusammen zu wirken, **dadurch gekennzeichnet, dass** sie ein abnehmbares Blockiermittel (19) beinhaltet, das imstande ist, mit der Verbindungsschnittstelle (14) zusammen zu wirken, um drehblockiert zu werden, wobei das Blockiermittel (19) und die Verbindungsschnittstelle (14) im Inneren des Beschlags (13) angeordnet sind.

2. Vorrichtung nach Anspruch 1, wobei die erste Schraube (140) mindestens eine Abflachung (25) oder mindestens einen Ansatz in Kontakt mit ihrer Grundplatte (26) umfasst, wobei das abnehmbare Blockiermittel (19) eine Gabel umfasst, die mindestens einen Zahn (190, 191) beinhaltet, der sich entlang einer Querachse senkrecht zur Längsachse der ersten Schraube (140) erstreckt, wobei der mindestens eine Zahn (190, 191) mit der mindestens einen Abflachung (25) oder dem Ansatz zusammenwirkt.

3. Vorrichtung nach Anspruch 1, wobei die erste Schraube (140) mindestens eine Aufnahme (27) umfasst, die sich senkrecht zur Längsachse der ersten Schraube (140) erstreckt, und wobei das abnehmbare Blockiermittel (19) eine Gabel beinhaltet, die einen Stab (193) umfasst, der konfiguriert ist, um in die Aufnahme (27) eingeführt zu werden.

4. Vorrichtung nach einem der vorstehenden Ansprüche, die Haltemittel beinhaltet, die im Inneren des Beschlags (13) angeordnet sind, und imstande sind das Blockiermittel (19) in Position zu halten.

5. Vorrichtung nach Anspruch 4, wobei die Haltemittel einen Federstift (21) umfassen, der einen Auflagebereich (20) umgibt, der fest mit dem Beschlag verbunden ist und das Blockiermittel (19) durchquert.

6. Vorrichtung nach Anspruch 4, wobei die Haltemittel mindestens einen Niet (24) umfassen, der sich an dem Blockiermittel (19) befindet.

7. Vorrichtung nach Anspruch 4, wobei die Haltemittel eine zweite Schraube (22) umfassen, die imstande ist, mit einer zweiten Mutter (23) zusammen zu wirken.

8. Vorrichtung nach Anspruch 7, wobei die Haltemittel einen Sicherungsdraht umfassen, der zwischen der zweiten Mutter (23) und dem Blockiermittel (19) angeordnet ist, der imstande ist, die zweite Schraube (22) in Position zu halten.

9. Vorrichtung nach einem der Ansprüche 4 bis 8, wobei die Haltemittel in einem Abstand liegen, der zwischen 12mm und 200mm von der Verbindungsschnittstelle (14) umfasst ist.

10. Vorrichtung nach einem der vorstehenden Ansprüche, wobei das kleine Pleuelauge (10) mindestens zwei Vorsprünge (28) senkrecht zur Längsachse des Pleuels (10) und in Kontakt mit dem Blockiermittel (19) umfasst.

11. Gitter-Schubumkehr (7), umfassend eine Vorrichtung zum Befestigen (DIS) mindestens eines kleinen Pleuelauges (10) einer Schubumkehrklappe nach einem der Ansprüche 1 bis 10.

12. Gondel (2) für ein Turbotriebwerk (3) eines Luftfahrzeugs, die eine Gitter-Schubumkehr (7) nach Anspruch 11 beinhaltet.

## Claims

1. Device (DIS) for attaching a connecting rod small end (10) of a thrust reversal cascade flap onto a fixed internal structure (11) of a turbojet engine (3) nacelle (2), comprising a fitting (13) that is suitable for being attached to said fixed internal structure (11) and a connection interface (14) forming a joint between the connecting rod small end (10) and the fitting (13), the connection interface (14) comprising a first screw (140) and a first nut (141) suitable cooperating with said first screw, **characterised in that** it comprises a removable locking means (19) suitable for cooperating with the connection interface (14) so as to lock it in rotation, the locking means (19) and the connection interface (14) being arranged inside the fitting (13).

2. Device according to claim 1, wherein the first screw (140) comprises at least one flat part (25) or at least one shoulder in contact with its base (26), the removable locking means (19) comprising a fork comprising at least one tooth (190, 191) extending along a transverse axis perpendicular to the longitudinal axis of the first screw (140), said at least one tooth (190, 191) cooperating with said at least one flat part (25) or shoulder.

3. Device according to claim 1, wherein the first screw (140) comprises at least one housing (27) extending perpendicularly to the longitudinal axis of the first screw (140), and wherein the removable locking means (19) comprises a fork comprising a rod (193) configured to be inserted into said housing (27).

4. Device according to any one of the preceding claims, comprising holding means arranged inside the fitting (13) and suitable for holding the locking means (19) in position.

5. Device according to claim 4, wherein the holding means comprise a spring pin (21) surrounding a bearing zone (20) integral with the fitting and passing through the locking means (19).

6. Device according to claim 4, wherein the holding means comprise at least one rivet (24) located on the locking means (19).

7. Device according to claim 4, wherein the holding means comprise a second screw (22) suitable for cooperating with a second nut (23).

8. Device according to claim 7, wherein the holding means comprise a wire to be braked arranged between the second nut (23) and the locking means (19), suitable holding the second screw (22) in position.

9. Device according to any one of claims 4 to 8, wherein the holding means are at a distance between 12mm and 200mm from the connection interface (14).

10. Device according to any one of the preceding claims, wherein the connecting rod small end (10) comprises at least two projections (28) perpendicular to the longitudinal axis of the connecting rod (10) and in contact with the locking means (19).

11. Cascade thrust reverser (7) comprising a device (DIS) for attaching at least one connecting rod small end (10) for a thrust reversal flap according to any one of claims 1 to 10.

12. Nacelle (2) for an aircraft turbojet engine (3), comprising a cascade thrust reverser (7) according to claim 11.
